(19)

Europäisches
Patentamt
European
Patent Office
Office européen
des brevets

(11) **EP 3 587 479 A1**

(12) **EUROPEAN PATENT APPLICATION**

(43) Date of publication:
 **01.01.2020 Bulletin 2020/01**

(21) Application number: **18181046.6**

(22) Date of filing: **30.06.2018**

(51) Int Cl.:
 ***C08J 7/04*** (2006.01)    ***B29C 59/02*** (2006.01)
 ***B32B 15/08*** (2006.01)   ***C09D 5/00*** (2006.01)

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(71) Applicant: **SABIC Global Technologies B.V.
 4612 PX Bergen op Zoom (NL)**

(72) Inventors:
 • ZHOU, Bing
  **Evansville, IN Indiana 47712 (US)**
 • GANDHI, Kaushal
  **Newburgh, IN Indiana 47630 (US)**
 • HIRSCH, Charles Allen
  **Wadesville, IN Indiana 47638 (US)**
 • BENTUM, Samuel
  **Evansville, IN Indiana 47638 (US)**

(74) Representative: **Elzaburu S.L.P.
 Miguel Angel 21, 2nd floor
 28010 Madrid (ES)**

(54) **COMPOSITE MATERIAL HAVING IMPROVED AESTHETICS AND COLOR AFTER SECONDARY OPERATIONS**

(57)    A composite material includes: a substrate layer; a first layer including a thermoplastic material applied to the substrate layer, the first layer having a refractive index greater than 1.2 resulting from application of at least one secondary process to the first layer; and a surface coating including a transparent polymer applied to the first layer. The surface coating has a refractive index of from 1 to 2. Methods for making the composite material and articles including the composite material are also described.

**EP 3 587 479 A1**

## EP 3 587 479 A1

**Description**

FIELD OF THE DISCLOSURE

The present disclosure relates to a composite material including a thermoplastic polymer layer that has had a secondary treatment applied thereto and a surface coating applied onto the thermoplastic polymer layer that improves the aesthetics and color of the composite material.

BACKGROUND OF THE DISCLOSURE

Surface finishes of plastics materials strongly impact aesthetics, gloss and color of the final product. Filled plastic materials are more susceptible to have a matte or rough surface as the flow, rigidity and refractive index of the fillers is typically different than the polymer in which they are located. In particular, high aspect ratio fillers such as glass fibers used to reinforce thermoplastics are more prone to have low gloss and high surface roughness, thus affecting the aesthetics and color appearance of the thermoplastic matrix. Careful optimization of surface finish variables (e.g., processing condition, type of plastic, and additives) can improve the surface composition or reduce surface roughness to some extent by masking the presence of the glass fiber. However, currently more complex applications require hybrid products from multiple material categories, such as plastics-on-metals, plastics-on-ceramics or plastics-on-plastics. During manufacturing of these products, the plastic portion often goes through harsh secondary operations that are typically optimized for their counterparts (e.g., metal, ceramic or high performance plastic materials) to the detriment of the plastic portion. Examples of secondary operations include mechanical treatment (sanding, trimming, polishing), heat treatment (annealing, laser ablation, laser remelting), chemical treatment (acid, base, cleaning agents), an electrical treatment (corona, plasma treatment), and electrochemical processes (anodization).

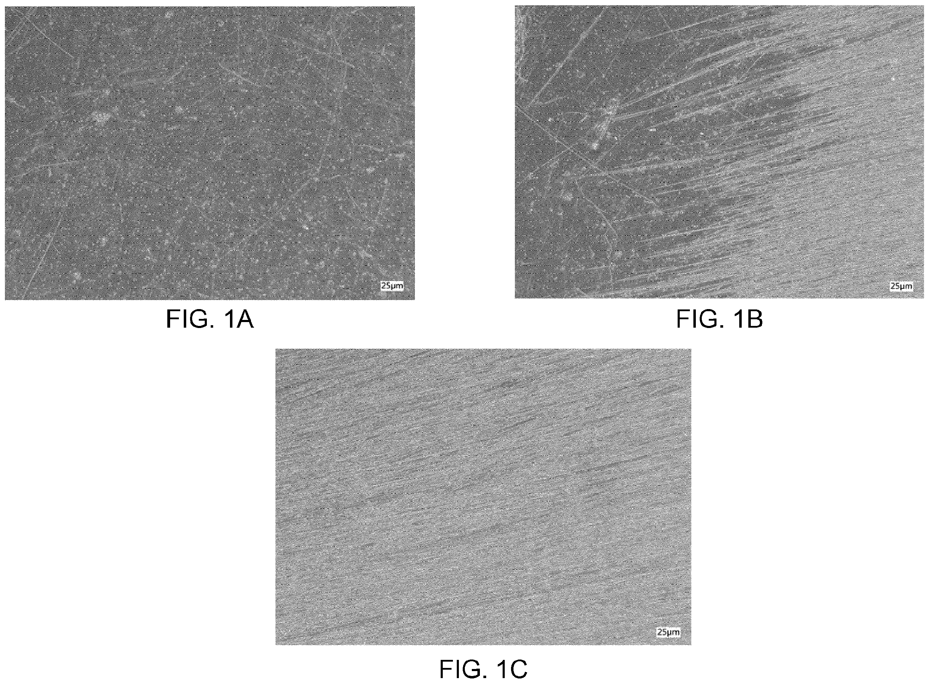

During the harsh secondary operations, the resin rich surface layer can be damaged or trimmed off, resulting in the exposure of underlying glass fibers. The surface of the polymer materials can also be degraded after prolonged exposure to heat, chemicals and water. In addition, these additional processing steps could break and shorten the glass fibers, reducing the bonding between the glass fibers and the polymer matrix. These factors contribute to increased surface roughness, low gloss and color shift. As an example, the 30% glass-filled polybutylene terephthalate color plaque shown in FIG. 1A has a mirror-like smooth surface as it is molded in a gloss surface mold. When polished with a silicon carbide (SiC) sand paper, however, the surface becomes much rougher, resulting in a significantly reduced gloss and a drastic shift in color appearance (see FIGS. 1B and 1C). A color offset can be provided to compensate for the color shift, however, due to process variations in multi-step secondary operations, a fixed color offset has had limited success in ensuring consistency in aesthetics and color quality of final products.

Post-secondary operations such as annealing and laser ablation can help to restore the color to certain extent. Annealing relieves the internal stresses built up during molding or cooling after molding, and machining and may help to restore the surface and color. Annealing, however, involves lengthy treatment at a high temperature near the glass transition temperature or melting temperature of the specific materials, increasing the risk of polymer degradation with extended cycle time and resulting in high energy costs.

Laser ablation can reduce surface roughness by re-melting the plastics to cover the floating glass fibers. However, this is only effective on flat parts, and requires a sophisticated and high cost laser system for complex part geometries. In addition, because the laser causes a rapid rise in temperature at the surface of the part, the materials are at risk for over-ablation, which can cause surface oxidation, darker color and an increase in surface hardness.

These and other shortcomings are addressed by aspects of the present disclosure.

SUMMARY

Aspects of the disclosure relate to a composite material including: a substrate layer; a first layer including a thermoplastic material applied to the substrate layer, the first layer having a refractive index greater than 1.2 resulting from application of at least one secondary process to the first layer; and a surface coating including a transparent polymer applied to the first layer. The surface coating has a refractive index of from 1 to 2.

Aspects of the disclosure further relate to a method for making a composite material including a substrate layer, a first layer and a surface coating. The method includes: applying the first layer onto the substrate layer, the first layer including a thermoplastic material; applying at least one secondary process to the first layer to cause a refractive index of the first layer to be increased; and applying a transparent polymer to the first layer to form the surface coating on the first layer. The surface coating has a refractive index of from 1 to 2.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A-1C are micrographs of color plaques of thermoplastic polymers before and after application of a secondary process to the polymer.

FIGS. 2A and 2B are diagrams illustrating refraction of a material having a secondary process applied to as compared to the same material including a surface coating applied thereto.

FIGS. 3A-3C are micrographs of color plaques of thermoplastic polymers before application of a secondary process to the polymer (FIG. 3A), after application of a secondary process to the polymer (FIG. 3B) and after application of a surface coating of epoxy to the thermoplastic polymer (FIG. 3C) according to aspects of the present disclosure.

FIG. 4 is a graph of reflectance vs. wavelength for the color plaques shown in FIGS. 3A-3C.

FIG. 5 is a micrograph showing the effects of clear coating of acrylic on a sample after a secondary process step according to aspects of the disclosure.

FIGS. 6A and 6B are micrographs showing the effects of clear coating of acrylic on a sample after a series of secondary process steps according to aspects of the disclosure.

FIG. 7 is a micrograph showing the effects of a surface coating on as molded color plaque sample according to aspects of the disclosure.

## DETAILED DESCRIPTION

The present disclosure can be understood more readily by reference to the following detailed description of the disclosure and the Examples included therein. In various aspects, the present disclosure relates to a composite material including: a substrate layer; a first layer including a thermoplastic material applied to the substrate layer, the first layer having a refractive index greater than 1.2 resulting from application of at least one secondary process to the first layer; and a surface coating including a transparent polymer applied to the first layer. The surface coating has a refractive index of from 1 to 2.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a filler material" includes mixtures of two or more filler materials.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

The present disclosure relates to methods for improving the aesthetics, restoring color and surface gloss, improving chemical resistance and improving scratch resistance to a thermoplastic polymer that has been subjected to a secondary operation. Following completion of secondary operation, a transparent clear coating having a refractive index between 1 and 2 is applied onto the surface of thermoplastic polymer.

The method described herein reduces the overall reflection of light at the plastic surface by modifying the surface roughness of final part surface. As described above, secondary operations increase the surface roughness of the part, which increases the light reflection (mainly through the diffuse reflection) at the material surface, as the incident light wave can be reflected, absorbed or transmitted by the material. The increased light reflection at the surface leads to a lower percentage of photons being absorbed or transmitted through the thermoplastic material resulting in less interaction with pigments or dyes in the thermoplastic polymer.

The application of a clear coating on the thermoplastic polymer surface works in multiple ways to reduce light reflection at the surface.

First, the process leaves a clear coating with a smooth surface, thus the diffuse reflection is greatly reduced due to the smoother surface. Diffuse reflection is a significant factor that leads to the overall increase in light reflection at the plastic surface.

Second, when refracted light into the coating layer reaches the interface between the clear coating and the exposed rough surface of the thermoplastic polymer after the secondary operation, diffuse reflection contributes a significant amount to total reflected light. Due to a relative close match in refractive indices of the clear coating and the thermoplastic polymer material, however, the total reflected light is further reduced.

Third, if the refractive index of the clear coating is between 1 (e.g., vacuum or air) and that of the underlying thermoplastic polymer material, the total reflectance at the interface of the air/coating and the coating/polymer will be much lower that the total reflectance of air/polymer when no coating is present.

Fourth, fillers such as glass fibers within the thermoplastic polymer can be shattered or broken after harsh secondary operations, which increase the surface area and shape irregularity of the surface of the thermoplastic polymer. The diffuse reflectance generally increases at the interface of the thermoplastic polymer and air if no coating material is applied. The liquid polymer of the coating material applied to the surface of the thermoplastic polymer can penetrate into the voids in the shattered/broken filler material and help to further reduce the diffuse reflectance.

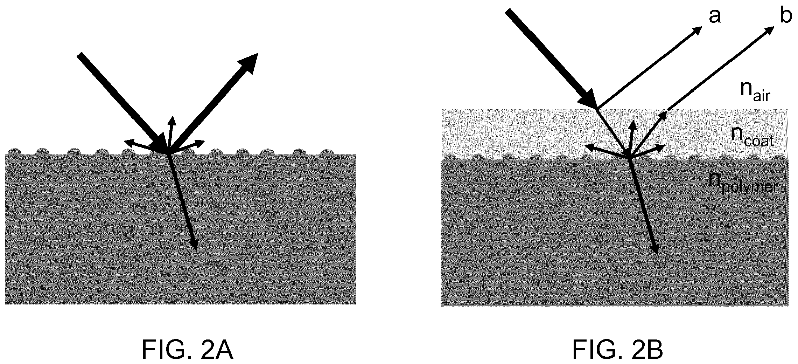

These concepts are illustrated in FIGS. 2A and 2B. In FIG. 2B, light waves (marked "a" and "b") are the two reflected light waves from the top and bottom surfaces of surface coating. For each light wave of a and b, the equation for amplitude of reflected light is dependent only on the refractive indices of the two adjacent mediums from which interface the light is reflected, assuming incident is normal to the coating or polymer surface. This is shown in equation (1):

$$r = \frac{n'-n}{n'+n} \qquad (1)$$

The light intensity is the square of amplitudes, as described in equation (2):

$$R = r^2 = \left[\frac{n'-n}{n'+n}\right]^2 \qquad (2)$$

As shown from this equation, the greater the difference in the refractive indices of the adjacent mediums, the greater the intensity of reflected light. The light intensity of reflected light wave a is dependent on the refractive index of air and surface coating, while that of light wave b is dependent on the refractive indices of surface coating and the thermoplastic polymer. As an example, the refractive index of an acrylic hard coat (surface coating) is 1.49 and that of polyethylene terephthalate (PET) is 1.57. If no acrylic hard coat is present, the light reflectance intensity is = $[(1-1.57)/(1+1.57)]^2$, or 5%. If the acrylic hard coat is included, light reflectance intensity at the air/coating surface is $[(1-1.49)/(1+1.49)]^2$, or 3.8%. Once the refracted light enters the interface of the surface coating and PET, the light reflectance intensity is $[(1.49-1.57)/(1.49+1.57)]^2$, or 0.07%. The total reflected light interface at both interfaces is 3.87%, lower than that without the surface coating. The total reflected light intensity (0.07%) is significantly reduced at the interface between the surface coating and thermoplastic polymer, reducing the effect of the surface roughness of the thermoplastic polymer to the total reflected light intensity at both the air/surface coating and surface coating/thermoplastic polymer interfaces.

Composite Materials

Aspects of the disclosure relate to a composite material including: a substrate layer; a first layer including a thermoplastic material applied to the substrate layer, the first layer having a refractive index greater than 1.2 resulting from application of at least one secondary process to the first layer; and a surface coating including a transparent polymer applied to the first layer, wherein the surface coating has a refractive index of from 1 to 2. In some aspects the composite material has a refractive index that is less than the refractive index of the first layer after application of the at least one secondary process to the first layer.

The surface coating affects the surface appearance of the first layer including the thermoplastic material in at least two ways: (1) it replaces the rough surface of the first layer (particularly after secondary operations) with a new glossy surface, reducing the diffuse reflectance; and (2) if the refractive index of the surface coating is between the refractive index of air and the refractive index of the first layer, it acts as an intermediate transition layer that further helps to reduce reflectance. Even if the refractive index of the surface coating is higher than that of the first layer, the total reflectance of the composite material may still be higher because the gap between the refractive index of air and the surface coating is higher.

In some aspects the surface coating has a transmission of at least 90% at a wavelength of from 380 nanometers (nm) to 800 nm at a thickness of 1 micrometer ($\mu$m).

The surface coating includes a transparent polymer. Any suitable transparent polymer may be used. Examples include, but are not limited to, an acrylic monomer, an epoxy, a polyurethane, a polysiloxane or a combination thereof.

The first layer including the thermoplastic material may further include one or more additional additives in some aspects. The one or more additional additives may include, but is not limited to, a filler, a pigment, a dye, a processing agent or a combination thereof.

In a particular aspect the first layer includes a filler. The filler may include, but is not limited to, glass fibers, carbon fibers, ceramic fibers, metal fibers, milled fibers, minerals, or a combination thereof. In a certain aspect the filler includes glass fibers.

The substrate layer may include any material onto which the first layer may be applied. Examples include, but are not limited to, aluminum, stainless steel, ceramic, metal, metal oxide, alloys thereof, and combinations thereof.

The thermoplastic material included in the first layer may include any suitable thermoplastic resin. Examples include, but are not limited to, polycarbonate (PC), polybutylene terephthalate (PBT), polyethylene terephthalate (PET), polyimide (PI), polyetherimide (PEI), polyphenylene oxide (PPO), acrylonitrile-butadiene-styrene (ABS), polyethylene (PE), polypropylene (PP), polyether ether ketone (PEEK), polyetherketoneketone (PEKK), polysulfone (PSU), polyether sulfone (PES), polyphenylene sulfide (PPS), polyamide (PA), polyphthalamide (PPA), copolymers thereof, and combinations thereof.

In one particular aspect, the first layer includes a PC/PBT thermoplastic resin blend and further includes glass fibers. In further aspects the first layer also includes one or more additional additives including a color package (e.g., pigments/dyes) and impact modifiers

As described herein, at least one secondary process is applied to the first layer including the thermoplastic material. Application of the secondary process to the first layer can change the surface morphology and/or chemical composition at the surface of the first layer. In some aspects in which the first layer includes fibers (such as glass fibers), the secondary operation could expose a higher concentration of fibers at the surface and/or fracture or expose the fibers at the surface. Changing the surface morphology and/or chemical composition at the surface of the first layer increases the refractive index of the first layer as compared to its refractive index prior to application of the secondary process. In some aspects the first layer has a refractive index greater than 1.2 resulting from application of at least one secondary process to the first layer. The at least one secondary process may generally include, but is not limited to, a mechanical treatment process, a heat treatment process, a chemical treatment process, an electrical treatment, an electrochemical process, or a combination thereof. More specifically, the at least one secondary process may include, but is not limited to milling, sanding, trimming, polishing, annealing, blasting, laser ablation, laser remelting, treatment with an acid composition, treatment with a basic composition, treatment with etchant, treatment with an oxidizing agent, treatment with a reducing agent, treatment with a cleaning agent, anodization, a computer numeric control (CNC) process, and combinations thereof.

In some aspects the composite material has an improved chemical resistance or scratch resistance as compared to a substantially identical reference composite material including the substrate layer and the first layer but that does not include the surface coating. In other words, the chemical resistance and/or scratch resistance of the composite material is improved as compared to a reference composite material that includes the same substrate layer and first layer of the composite material, only the reference composite material does not include the surface coating. The inclusion of the surface coating to the composite material protects the first layer from exposure to chemicals and from scratching. Exemplary chemicals include, but are not limited to, health care products, acids, bases, alcohols, hydrocarbons, organic solvents, and cleaning agents.

## Methods for Making a Composite Material

Aspects of the disclosure further relate to methods for making a composite material, the composite material including a substrate layer, a first layer and a surface coating. The method includes: applying the first layer onto the substrate layer, the first layer including a thermoplastic material; applying at least one secondary process to the first layer to cause a refractive index of the first layer to be increased (such as by changing the surface morphology and/or chemical composition at the surface of the first layer); and applying a transparent polymer to the first layer to form the surface coating on the first layer. The surface coating has a refractive index of from 1 to 2. In some aspects the composite material has a refractive index that is less than the refractive index of the first layer after application of the at least one secondary process to the first layer.

The substrate layer, the first layer and the surface coating may include any of the materials and have any of the properties described herein.

The surface coating including the transparent polymer may be applied to the first layer in a liquid phase. The surface coating may be applied at room temperature if the liquid phase of the transparent polymer provides good flow at this temperature. If necessary to decrease the viscosity of the transparent polymer, however, the surface coating may be heated to an elevated temperature prior to or during application onto the first layer. The liquid phase including the transparent polymer may then be allowed to cool and solidify into a solid surface coating. When applied to the first surface as a flowing liquid phase, the surface coating can penetrate into voids in the first layer (e.g., shattered/broken filler material) and help to reduce the diffuse reflectance of the composite material.

The fist layer may be applied to the substrate layer by any suitable process. Examples include, but are not limited to, a nano molding technology (NMT) process, an extrusion process, an injection molding process, an additive manufacturing process, a lamination process, a compression molding process, a metal insert molding process, a calendaring process, or a combination thereof.

The at least one secondary process may generally include, but is not limited to, a mechanical treatment process, a heat treatment process, a chemical treatment process, an electrical treatment, an electrochemical process, or a combination thereof. More specifically, the at least one secondary process may include, but is not limited to milling, sanding, trimming, polishing, annealing, blasting, laser ablation, laser remelting, treatment with an acid composition, treatment with a basic composition, treatment with etchant, treatment with an oxidizing agent, treatment with a reducing agent, treatment with a cleaning agent, anodization, a computer numeric control (CNC) process, and combinations thereof.

The composite material may in some aspects have an improved chemical resistance or scratch resistance as compared to a substantially identical reference composite material including the substrate layer and the first layer but that does not include the surface coating.

As described, the composite material formed in accordance with the method has a refractive index of from 1 to 2.

## Composite Materials including Polyetherimide and Glass Fibers

Certain aspects of the disclosure relate to a composite material including: a first layer including a thermoplastic material, the first layer having a refractive index greater than 1.2; and a surface coating comprising a transparent polymer applied to the first layer. The surface coating has a refractive index of from 1 to 2, and the thermoplastic material comprises polyetherimide and the first layer further includes glass fibers. In particular aspects the transparent polymer is a two-component epoxy. In such aspects the first layer including polyetherimide and glass fibers may already have a high refractive index due to the chemical composition and/or surface morphology at the surface of the first layer even without application of a secondary process, and the surface coating could improve the aesthetic properties and refractive index of the composite material.

## Articles Including the Composite Material

Aspects of the disclosure further relate to articles including the composite material described herein. In one aspect the article is a consumer electronics device or a medical device. In certain aspects the article is incorporated into a cellular or automobile communication device, and in a particular aspect the article is a metal-plastic hybrid part or a split antenna for a cellular or automobile communication device.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1: A composite material comprising:

a substrate layer;
a first layer comprising a thermoplastic material applied to the substrate layer, the first layer having a refractive index greater than 1.2 resulting from application of at least one secondary process to the first layer; and
a surface coating comprising a transparent polymer applied to the first layer, wherein the surface coating has a refractive index of from 1 to 2.

Aspect 2. The composite material according to Aspect 1, wherein the surface coating has a transmission of at least 90% at a wavelength of from 380 nanometers (nm) to 800 nm at a thickness of 1 micrometer ($\mu$m).

Aspect 3. The composite material according to Aspect 1 or 2, wherein the transparent polymer comprises an acrylic monomer, an epoxy, a polyurethane, a polysiloxane or a combination thereof.

Aspect 4. The composite material according to any of Aspects 1 to 3, wherein the first layer further comprises one or more additional additives.

Aspect 5. The composite material according to Aspect 4, wherein the one or more additional additives comprises a filler, a pigment, a dye, a processing agent or a combination thereof.

Aspect 6. The composite material according to any of Aspects 1 to 5, wherein the first layer further comprises a filler comprising glass fibers, carbon fibers, ceramic fibers, metal fibers, milled fibers, minerals, or a combination thereof.

Aspect 7. The composite material according to any of Aspects 1 to 6, wherein the substrate layer comprises aluminum, stainless steel, ceramic, metal, metal oxide, alloys thereof, or a combination thereof.

Aspect 8. The composite material according to any of Aspects 1 to 7, wherein the thermoplastic material comprises polycarbonate, polybutylene terephthalate, polyethylene terephthalate, polyimide, polyetherimide, polyphenylene oxide, acrylonitrile-butadiene-styrene, polyethylene, polypropylene, polyether ether ketone (PEEK), polyetherketoneketone (PEKK), polysulfone (PSU), polyether sulfone (PES), polyphenylene sulfide (PPS), polyamide (PA), polyphthalamide (PPA), copolymers thereof, or a combination thereof.

Aspect 9. The composite material according to any of Aspects 1 to 8, wherein the at least one secondary process comprises a mechanical treatment process, a heat treatment process, a chemical treatment process, an electrical treatment, an electrochemical process, or a combination thereof.

Aspect 10. The composite material according to any of Aspects 1 to 9, wherein the at least one secondary process comprises milling, sanding, trimming, polishing, annealing, blasting, laser ablation, treatment with an acid composition, treatment with a basic composition, treatment with a cleaning agent, anodization, a computer numeric control (CNC) process, or a combination thereof.

Aspect 11. The composite material according to any of Aspects 1 to 10, wherein the composite material has an improved chemical resistance or scratch resistance as compared to a substantially identical reference composite material including the substrate layer and the first layer but that does not include the surface coating.

Aspect 12. The composite material according to any of Aspects 1 to 11, wherein the composite material has a refractive index that is less than the refractive index of the first layer after application of the at least one secondary process to the first layer.

Aspect 13. An article including the composite material according to any of Aspects 1 to 12.

Aspect 14. The article according to Aspect 13, wherein the article is a consumer electronics device or a medical device.

Aspect 15. The article according to Aspect 13, wherein the article is a metal-plastic hybrid part for a cellular or automobile communication device.

Aspect 16. A method for making a composite material comprising a substrate layer, a first layer and a surface coating, the method comprising:

applying the first layer onto the substrate layer, the first layer comprising a thermoplastic material;
applying at least one secondary process to the first layer to cause a refractive index of the first layer to be increased; and
applying a transparent polymer to the first layer to form the surface coating on the first layer, wherein the surface coating has a refractive index of from 1.2 to 2.

Aspect 17. The method according to Aspect 16, wherein the surface coating has a transmission of at least 90% at a wavelength of from 380 nanometers (nm) to 800 nm at a thickness of 1 $\mu$m.

Aspect 18. The method according to Aspect 16 or 17, wherein the transparent polymer comprises an acrylic monomer, an epoxy, a polyurethane, a polysiloxane or a combination thereof.

Aspect 19. The method according to any of Aspects 16 to 18, wherein the first layer further comprises one or more additional additives.

Aspect 20. The method according to Aspect 19, wherein the one or more additional additives comprises a filler, a pigment, a dye, a processing agent or a combination thereof.

Aspect 21. The method according to any of Aspects 16 to 20, wherein the first layer further comprises a filler comprising glass fibers, carbon fibers, ceramic fibers, milled fibers, minerals, or a combination thereof.

Aspect 22. The method according to any of Aspects 16 to 21, wherein the substrate layer comprises aluminum, stainless steel, ceramic, metal oxide, alloys thereof, or a combination thereof.

Aspect 23. The method according to any of Aspects 16 to 22, wherein the thermoplastic material comprises polycarbonate, polybutylene terephthalate, polyethylene terephthalate, polyetherimide, polyphenylene oxide, acrylonitrile-butadiene-styrene, polyethylene, polypropylene, copolymers thereof, or a combination thereof.

Aspect 24. The method according to any of Aspects 16 to 23, wherein the at least one secondary process comprises a mechanical treatment process, a heat treatment process, a chemical treatment process, an electrical treatment, an electrochemical process, or a combination thereof.

Aspect 25. The method according to any of Aspects 16 to 24, wherein the at least one secondary process comprises milling, sanding, trimming, polishing, annealing, blasting, laser ablation, treatment with an acid composition, treatment with a basic composition, treatment with a cleaning agent, anodization, a computer numeric control (CNC) process, or a combination thereof.

Aspect 26. The method according to any of Aspects 16 to 25, wherein the first layer is applied to the substrate layer by a nano molding technology (NMT) process, an extrusion process, an injection molding process, an additive manufacturing process, a lamination process, a compression molding process, a metal insert molding process, or a calendaring process.

Aspect 27. The method according to any of Aspects 16 to 26, wherein the composite material has an improved chemical resistance or scratch resistance as compared to a substantially identical reference composite material including the substrate layer and the first layer but that does not include the surface coating.

Aspect 28. An article including the composite material according to any of Aspects 16 to 27.

Aspect 29. The article according to Aspect 28, wherein the article is a consumer electronics device or a medical device.

Aspect 30. The article according to Aspect 28, wherein the article is a metal-plastic hybrid part for a cellular or automobile communication device.

Aspect 31. A composite material comprising:

a first layer comprising a thermoplastic material, the first layer having a refractive index greater than 1.2; and
a surface coating comprising a transparent polymer applied to the first layer, wherein the surface coating has a refractive index of from 1 to 2,
wherein the thermoplastic material comprises polyetherimide and the first layer further includes glass fibers.

Aspect 32. The composite material according to Aspect 31, wherein the transparent polymer comprises a two-component epoxy.

Aspect 33. The composite material according to Aspect 31 or 32, wherein the surface coating has a transmission of at least 90% at a wavelength of from 380 nanometers (nm) to 800 nm at a thickness of 1 micrometer ($\mu$m).

Aspect 34. The composite material according to any of Aspects 31 to 33, wherein the transparent polymer comprises an acrylic monomer, an epoxy, a polyurethane, a polysiloxane or a combination thereof.

Aspect 35. The composite material according to any of Aspects 31 to 34, wherein the first layer further comprises one or more additional additives.

Aspect 36. The composite material according to Aspect 35, wherein the one or more additional additives comprises a filler, a pigment, a dye, a processing agent or a combination thereof.

Aspect 37. The composite material according to any of Aspects 31 to 36, wherein the first layer further comprises a filler comprising carbon fibers, ceramic fibers, metal fibers, milled fibers, minerals, or a combination thereof.

Aspect 38. The composite material according to any of Aspects 31 to 37, wherein the composite material further includes a substrate layer comprising aluminum, stainless steel, ceramic, metal, metal oxide, alloys thereof, or a combination thereof.

Aspect 39. The composite material according to any of Aspects 31 to 38, wherein the thermoplastic material further comprises polycarbonate, polybutylene terephthalate, polyethylene terephthalate, polyimide, polyphenylene oxide, acrylonitrile-butadiene-styrene, polyethylene, polypropylene, polyether ether ketone (PEEK), polyetherketoneketone (PEKK), polysulfone (PSU), polyether sulfone (PES), polyphenylene sulfide (PPS), polyamide (PA), polyphthalamide (PPA), copolymers thereof, or a combination thereof.

Aspect 40. The composite material according to any of Aspects 31 to 39, wherein the first layer has had at least one secondary process applied thereto, wherein the at least one secondary process comprises a mechanical treatment process, a heat treatment process, a chemical treatment process, an electrical treatment, an electrochemical process, or a combination thereof.

Aspect 41. The composite material according to any of Aspects 31 to 40, wherein the first layer has had at least one secondary process applied thereto, wherein the at least one secondary process comprises milling, sanding, trimming, polishing, annealing, blasting, laser ablation, treatment with an acid composition, treatment with a basic composition, treatment with a cleaning agent, anodization, a computer numeric control (CNC) process, or a combination thereof.

Aspect 42. The composite material according to any of Aspects 31 to 41, wherein the composite material has an improved chemical resistance or scratch resistance as compared to a substantially identical reference composite material including the first layer but that does not include the surface coating.

Aspect 43. The composite material according to any of Aspects 40 to 42, wherein the composite material has a refractive index that is less than the refractive index of the first layer after application of the at least one secondary process to the first layer.

Aspect 44. An article including the composite material according to any of Aspects 31 to 43.

Aspect 45. The article according to Aspect 44, wherein the article is a consumer electronics device or a medical device.

Aspect 46. The article according to Aspect 44, wherein the article is a metal-plastic hybrid part for a cellular or automobile communication device.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1

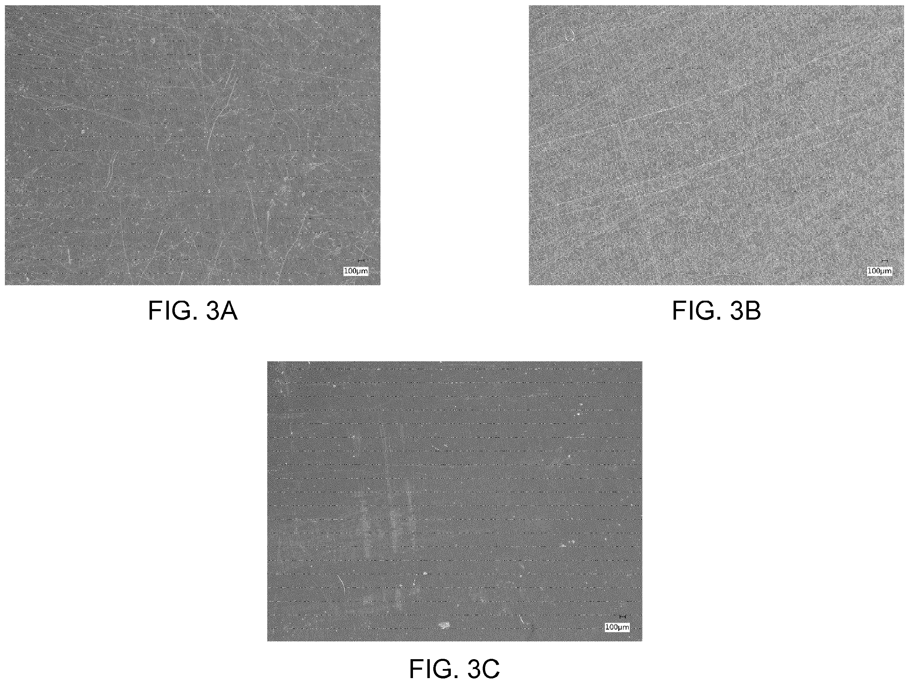

A plaque of thermoplastic polymer (Red standard) is shown in FIG. 3A. After milling the plaque had the visual appearance show in FIG. 3B (Red Milled Side). A two-component epoxy resin system was then applied to the red milled side of the plaque; results are shown in FIG. 3C (Red Milled Side-Epoxy). From FIG. 3C it is apparent that color was restored when the rough surface of sanded color plaque was coated with the surface coating. The rich and dark red color was closer to the original color from the plaque. Color measurements of the 3 samples are shown in Table 1:

**Table 1**

| Name | L* | a* | b* | C* | h° | DL* | Da* | Db* | DC* | DH* | DE2000 |
|---|---|---|---|---|---|---|---|---|---|---|---|
| Red Standard | 41.1 | 33.11 | 17.26 | 37.33 | 27.53 | - | - | - | - | - | - |
| Red Milled Side | 42.69 | 31.88 | 15.77 | 35.57 | 26.31 | 1.59 L | -1.22 G | -1.49 B | -1.77 D | -0.77 R | 1.11 |
| Red Milled Side-Epoxy | 41.15 | 33.42 | 17.56 | 37.75 | 27.72 | 0.05 L | 0.31 R | 0.30 Y | 0.42 B | 0.12 Y | 0.18 |

The measurements were made using an LCh color system; D represents the delta (change) of the measurement compared to the standard. DE2000 is calculated in accordance with CIE organization standards. Using the color plaque as a reference point, the milled side deviated from the original color points as demonstrated in the DL, Da, Db, DC and DH with a DE2000 of 1.1. Once the milled surface was covered with cured epoxy, all the dimensions in color spaces are closer to the original values with DE2000 of 0.18.

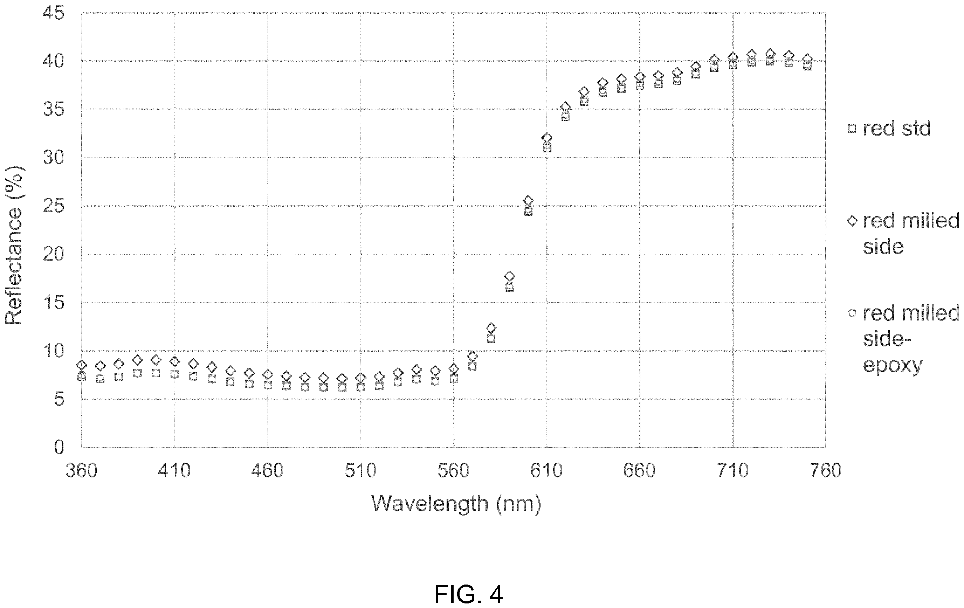

FIG. 4 shows the reflectance spectra of three samples of FIGS. 3A-3C. The molded color plaque (Red Standard) has a smooth glossy surface with a relatively high specular reflectance. After milling (Red Milled Side), the surface became more coarse, thus the diffuse reflectance increased, showing increased reflectance across the visible region. After the surface coating was applied (Red Milled Side-Epoxy), the overall reflectance is reduced.

**Example 2**

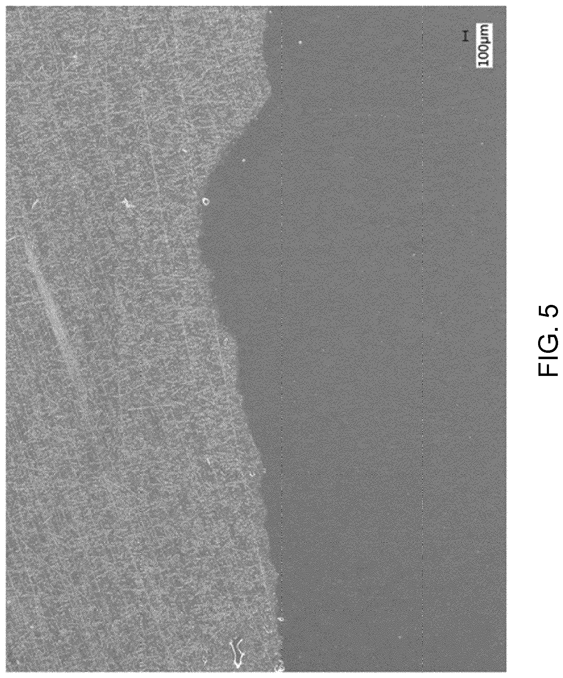

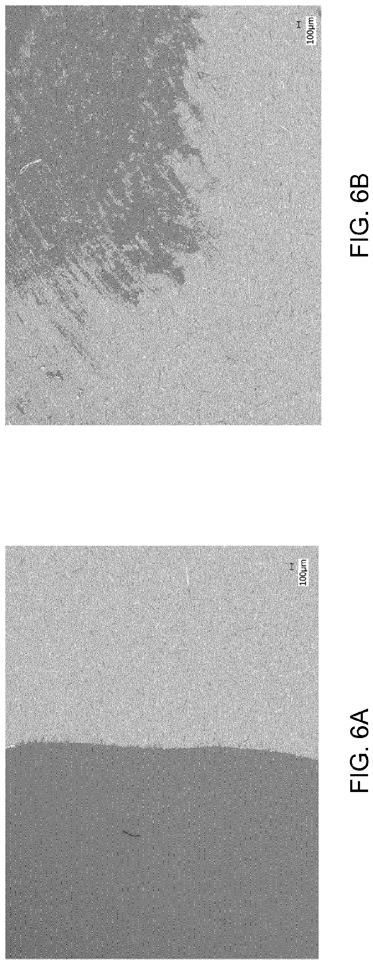

FIGS. 5 and 6B show the effects of clear coating of acrylic on a sample after a series of secondary operation steps; in this case sanding (FIG. 5) and anodization (FIG. 6B). FIG. 6A is an anodized epoxy-coated sample provided for comparison. The lighter portion of the sample is the treated portion; the darker portion includes the acrylic surface coating. The color is significantly improved and restored to its rich and dark color similar to the original color plaques shown in FIG. 3C.

**Example 3**

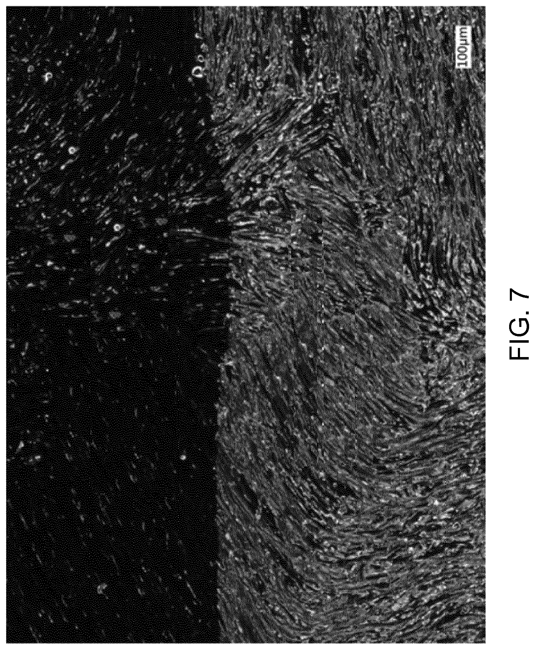

A glass-filled polyetherimide (PEI) sample was also evaluated. A comparison of the sample before and after coating with a 2-component epoxy coating is shown in FIG. 7. No secondary operation was applied to the sample; rather, the sample has a much coarser surface compared to those of the samples of Examples 1 and 2 above; many glass fibers of the sample are exposed on the surface. The lighter portion of the sample is shown prior to coating; the darker portion includes the coating. From FIG. 7, it is evident that the surface coating results in a much darker and glossier finish.

The color measurement data on the polyetherimide sample is shown in Table 2: **Table 2**

| Name | L* | a* | b* | C* | h° | DL* | Da* | Db* | DC* | DH* | DE2000 |
|---|---|---|---|---|---|---|---|---|---|---|---|
| Original Surface | 32.34 | 0.21 | -1.02 | 1.04 | 281.59 | - | - | - | - | - | - |
| 0-Epoxy Treated | 28.61 | 0.12 | -1.01 | 1.02 | 276.93 | -3.73 D | -0.09 G | 0.01 | -0.03 D | -0.08 G | 2.9 |

Table 2 shows the Lab color measurement of the samples shown in FIG. 7 using the original uncoated area on the color plaque as a reference point. Once the surface was covered with epoxy (the surface coating), all of the dimensions in color spaces are closer to the original values with delta E at 2.21 and DL -3.73. The color shift also indicates that the surface coating results in a darker color.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the invention should be determined with reference to the appended claims, along with the full scope of equivalents to which such claims are entitled.

**Claims**

1. A composite material comprising:

   a substrate layer;
   a first layer comprising a thermoplastic material applied to the substrate layer, the first layer having a refractive index greater than 1.2 resulting from application of at least one secondary process to the first layer; and

a surface coating comprising a transparent polymer applied to the first layer, wherein the surface coating has a refractive index of from 1 to 2.

2. The composite material according to claim 1, wherein the surface coating has a transmission of at least 90% at a wavelength of from 380 nanometers (nm) to 800 nm at a thickness of 1 micrometer ($\mu$m).

3. The composite material according to claim 1 or 2, wherein the transparent polymer comprises an acrylic monomer, an epoxy, a polyurethane, a polysiloxane or a combination thereof.

4. The composite material according to any of claims 1 to 3, wherein the first layer further comprises one or more additional additives comprising a filler, a pigment, a dye, a processing agent or a combination thereof.

5. The composite material according to any of claims 1 to 4, wherein the first layer further comprises a filler comprising glass fibers, carbon fibers, ceramic fibers, metal fibers, milled fibers, minerals, or a combination thereof.

6. The composite material according to any of claims 1 to 5, wherein the substrate layer comprises aluminum, stainless steel, ceramic, metal, metal oxide, alloys thereof, or a combination thereof.

7. The composite material according to any of claims 1 to 6, wherein the thermoplastic material comprises polycarbonate, polybutylene terephthalate, polyethylene terephthalate, polyimide, polyetherimide, polyphenylene oxide, acrylonitrile-butadiene-styrene, polyethylene, polypropylene, polyether ether ketone (PEEK), polyetherketoneketone (PEKK), polysulfone (PSU), polyether sulfone (PES), polyphenylene sulfide (PPS), polyamide (PA), polyphthalamide (PPA), copolymers thereof, or a combination thereof.

8. The composite material according to any of claims 1 to 7, wherein the at least one secondary process comprises a mechanical treatment process, a heat treatment process, a chemical treatment process, an electrical treatment, an electrochemical process, or a combination thereof.

9. The composite material according to any of claims 1 to 8, wherein the at least one secondary process comprises milling, sanding, trimming, polishing, annealing, blasting, laser ablation, treatment with an acid composition, treatment with a basic composition, treatment with a cleaning agent, anodization, a computer numeric control (CNC) process, or a combination thereof.

10. The composite material according to any of claims 1 to 9, wherein the composite material has an improved chemical resistance or scratch resistance as compared to a substantially identical reference composite material including the substrate layer and the first layer but that does not include the surface coating.

11. An article including the composite material according to any of claims 1 to 10, wherein the article is a consumer electronics device, a medical device, or a metal-plastic hybrid part for a cellular or automobile communication device.

12. A method for making a composite material comprising a substrate layer, a first layer and a surface coating, the method comprising:

applying the first layer onto the substrate layer, the first layer comprising a thermoplastic material;
applying at least one secondary process to the first layer to cause a refractive index of the first layer to be increased; and
applying a transparent polymer to the first layer to form the surface coating on the first layer, wherein the surface coating has a refractive index of from 1.2 to 2.

13. The method according to claim 12, wherein the surface coating has a transmission of at least 90% at a wavelength of from 380 nanometers (nm) to 800 nm at a thickness of 1 $\mu$m.

14. The method according to claim 12 or 13, wherein the at least one secondary process comprises milling, sanding, trimming, polishing, annealing, blasting, laser ablation, treatment with an acid composition, treatment with a basic composition, treatment with a cleaning agent, anodization, a computer numeric control (CNC) process, or a combination thereof.

15. The method according to any of claims 12 to 14, wherein the first layer is applied to the substrate layer by a nano molding technology (NMT) process, an extrusion process, an injection molding process, an additive manufacturing process, a lamination process, a compression molding process, a metal insert molding process, or a calendaring process.

FIG. 1A

FIG. 1B

FIG. 1C

FIG. 2A

FIG. 2B

$n_{air}$

$n_{coat}$

$n_{polymer}$

a

b

FIG. 3B

FIG. 3C

FIG. 3A

FIG. 4

FIG. 5

FIG. 6B

FIG. 6A

FIG. 7

Europäisches
Patentamt

European
Patent Office

Office européen
des brevets

# EUROPEAN SEARCH REPORT

**Application Number**

EP 18 18 1046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 132 911 A1 (SABIC GLOBAL TECHNOLOGIES BV [NL]) 22 February 2017 (2017-02-22) | 1,2,4, 6-15 | INV. C08J7/04 B29C59/02 B32B15/08 C09D5/00 |
| Y | * paragraphs [0001], [0006], [0009], [0012], [0026], [0091]; figure 7 * | 1-15 | |
| X | JP H10 286909 A (NIPPON STEEL CORP) 27 October 1998 (1998-10-27) | 1-10, 12-15 | |
| A | * paragraphs [0008], [0012], [0016] - [0019]; figures 3-5 * | 11 | |
| Y | US 2008/124532 A1 (MENOVCIK GREGORY H [US] ET AL) 29 May 2008 (2008-05-29) * paragraphs [0002], [0004], [0187] * | 1-15 | |
| Y | Jörg Ihde ET AL: "Cleaning and activation prior to painting/lacqueringand bonding: surfaces are the key issue for fiber composite materials", Annual Report 2011/2012, 1 January 2013 (2013-01-01), page 8489, XP055552096, Bremen (DE) Retrieved from the Internet: URL:https://www.ifam.fraunhofer.de/content/dam/ifam/en/documents/Adhesive_Bonding_Surfaces/plato/cleaning_activation_fraunhofer_ifam.pdf [retrieved on 2019-02-05] * the whole document * | 1-15 | **TECHNICAL FIELDS SEARCHED (IPC)** B32B B29C C08J |

-/--

The present search report has been drawn up for all claims

| Place of search | Date of completion of the search | Examiner |
|---|---|---|
| Munich | 5 February 2019 | Okunowski, Joachim |

EPO FORM 1503 03.82 (P04C01)

page 1 of 2

Europäisches
Patentamt

European
Patent Office

Office européen
des brevets

## EUROPEAN SEARCH REPORT

Application Number

EP 18 18 1046

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Mikell Knights: "Composite Coating Makes Glass Fibers Less Aggressive in Sliding, Turning Parts", , 1 August 2005 (2005-08-01), XP055552101, Retrieved from the Internet: URL:https://www.ptonline.com/articles/composite-coating-makes-glass-fibers-less-aggressive-in-sliding-turning-parts [retrieved on 2019-02-05] * the whole document * | 1-15 | |
| T | JIN-GANG LIU ET AL: "High refractive index polymers: fundamental research and practical applications", JOURNAL OF MATERIALS CHEMISTRY, vol. 19, no. 47, 1 January 2009 (2009-01-01), page 8907, XP055551748, GB ISSN: 0959-9428, DOI: 10.1039/b909690f * the whole document * | | |
| T | JIN-GANG LIU ET AL: "Optically Transparent Sulfur-Containing Polyimide-TiO 2 Nanocomposite Films with High Refractive Index and Negative Pattern Formation from Poly(amic acid)-TiO 2 Nanocomposite Film", CHEMISTRY OF MATERIALS, vol. 20, no. 1, 1 January 2008 (2008-01-01), pages 273-281, XP055551749, ISSN: 0897-4756, DOI: 10.1021/cm071430s * the whole document * | | |

TECHNICAL FIELDS
SEARCHED (IPC)

The present search report has been drawn up for all claims

| Place of search | Date of completion of the search | Examiner |
|---|---|---|
| Munich | 5 February 2019 | Okunowski, Joachim |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 18 18 1046

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2019

| Patent document cited in search report | | | Publication date | Patent family member(s) | | Publication date |
|---|---|---|---|---|---|---|
| EP 3132911 | A1 | | 22-02-2017 | CN 103764366 A | | 30-04-2014 |
| | | | | CN 106945227 A | | 14-07-2017 |
| | | | | EP 2747979 A2 | | 02-07-2014 |
| | | | | EP 3132911 A1 | | 22-02-2017 |
| | | | | US 2013052465 A1 | | 28-02-2013 |
| | | | | US 2014170397 A1 | | 19-06-2014 |
| | | | | WO 2013027167 A2 | | 28-02-2013 |
| JP H10286909 | A | | 27-10-1998 | NONE | | |
| US 2008124532 | A1 | | 29-05-2008 | CN 101802042 A | | 11-08-2010 |
| | | | | EP 2181135 A1 | | 05-05-2010 |
| | | | | JP 5868001 B2 | | 24-02-2016 |
| | | | | JP 2010536988 A | | 02-12-2010 |
| | | | | KR 20100044896 A | | 30-04-2010 |
| | | | | US 2008124532 A1 | | 29-05-2008 |
| | | | | WO 2009025703 A1 | | 26-02-2009 |

EPO FORM P0459

For more details about this annex : see Official Journal of the European Patent Office, No. 12/82